# EUROPÄISCHE PATENTANMELDUNG

(11) **EP 2 233 336 A2**
(43) Veröffentlichungstag der Anmeldung: **29.09.2010**
(21) Anmeldenummer: 10003097.2
(22) Anmeldetag: 22.03.2010
(51) Int. Cl.: B60J 7/12

(54) **Spannbügel für ein Faltverdeck eines Personenkraftwagens**

(30) Priorität: 26.03.2009 DE 102009015216
(71) Anmelder: Magna Car Top Systems GmbH, 74321 Bietigheim-Bissingen (DE)
(72) Erfinder: Just, Jan, Bloomfield Hills, MI 48301 (US); Yoder, Kwan, Waterford, MI 48329 (US)

(57) **Zusammenfassung**

Ein über ein Verdeckgestänge bewegbares Faltverdeck (1), wobei ein Spannbügel (5) zum Straffen eines vorderen und hinteren festgelegten Abschlusses eines Verdeckbezugs schwenkbar um eine im Wesentlichen horizontal verlaufende, fahrzeugfeste Schwenkachse gelagert ist, und das Schwenken des Spannbügels über endseitig mit dem Spannbügel verbundene Lenker (23,34) erfolgt, wobei wenigstens einer dieser Lenker mit einem den C-Säulenlenker (9) verbindenden und bewegungssteuernden Bauteil zusammenwirkt.
Das verbindende und bewegungssteuernde Bauteil ist eine Kulissenscheibe (19). Es soll ein Faltverdeck mit einer mechanischen Steuerung des Spannbügels geschaffen werden, wobei der Spannbügel in abgelegter Position mittels einer einfachen, zwangsgesteuerten, mechanischen Steuerung eine besonders raumsparende Lage einnimmt und in dieser Lage zusätzlich durch die mechanische Steuerung verriegelt wird.
Der Spannbügel für ein Faltverdeck wird vorzugsweise bei Personenkraftwagen eingesetzt.

## Beschreibung

Die Erfindung betrifft einen Spannbügel für ein Faltverdeck eines Personenkraftwagens nach dem Oberbegriff des Anspruches 1.

Es sind Faltverdecke für Fahrzeuge bekannt, bei denen der Verdeckstoff in geschlossener Dachposition über einen meist U-förmigen Spannbügel gespannt wird und der Spannbügel beispielsweise von außen auf einem Verdeckkastendeckel aufliegend positioniert ist. Bei sich öffnendem Faltverdeck schwenkt der Spannbügel aus seiner "geschlossenen Dachposition" in eine im Wesentlichen senkrechte Position, damit der Verdeckkastendeckel geöffnet und dabei nach oben geschwenkt werden kann. Der Spannbügel und das Faltverdeck werden hierauf in einen heckseitigen Aufnahmeraum geschwenkt und vom Verdeckkastendeckel abgedeckt.

Über verschiedene Lenkeranordnungen wird zur Steigerung der Packungsdichte des abgelegten Faltverdecks der Spannbügel in eine besonders günstige, den Ablageraum ausnützende Position verlagert. Hierbei kann der Spannbügel eine vertikale oder eine auch horizontale Verlagerung erfahren. Die Verlagerungen können auch durch Kombinationen, von Spannbügel mit den Fahrzeugaufbau verbindenden Lenkern und Kurvenführungen oder Gleitbahnen, auf denen die Lenker oder der Spannbügel geführt werden, erreicht werden.

Bei geöffnetem und im Aufnahmeraum abgelegtem Faltverdeck kann das Faltverdeck über Verriegelungen in seiner Ablageposition gesichert werden, wobei die Verriegelung des Spannbügels über das abgelegte und zusammengefaltete Faltverdeck erfolgt.

Die EP 1 354 741 A1 gibt ein Faltverdeck wieder, das ein mehrteiliges Verdeckgestänge umfasst. Das Verdeckgestänge ist in einem rückwärtigen Bereich des Faltverdecks mit einem -von oben gesehen- U-förmigen Spannbügel versehen, der den Verdeckstoff des Faltverdecks in einer definierten Lage hält, wenn das Faltverdeck eine Schließstellung einnimmt. Benachbart freier Enden des Spannbügels sind Konsolen mit Kulissenbahnen vorgesehen, die mit Führungsbolzen von Koppellenkern zusammenwirken. Darüber hinaus ist der Spannbügel über Schwenkachsen verstellbar.

Aus der DE 39 37 764 C2 geht ein Faltverdeck mit einem Verdeckgestänge hervor, das für ein Kraftfahrzeug bestimmt ist und unter Vermittlung einer Antriebsvorrichtung betätigt wird. Die Antriebsvorrichtung, ein Stellzylinder, arbeitet über ein Stirnradgetriebe mit einem Hauptlenker zusammen. In einem hinteren Bereich des Faltverdecks ist ein gelenkig gelagerter Spannbügel eingebaut, der zwischen einer Schließstellung und einer hochgestellten Offenstellung bewegbar ist. In der hochgestellten Offenstellung des Spannbügels wird letztere mittel eines Sicherungshebels gehalten. Der Sicherungshebel ist mit einer kreisförmigen Kurvenbahn mit einer Mündung versehen. Über die Mündung und die Kurvenbahn gelangt ein Sicherungsbolzen in eine Endlage, die der hochgestellten Offenstellung des Spannbügels entspricht.

Die vorliegende Erfindung beschäftigt sich mit dem Problem, für ein Faltverdeck eine mechanische Steuerung des Spannbügels zu schaffen, bei welcher der Spannbügel in abgelegter Position mittels einer einfachen, zwangsgesteuerten, mechanischen Steuerung eine besonders raumsparende Lage einnimmt und in dieser Lage zusätzlich durch die mechanische Steuerung verriegelt wird.

Erfindungsgemäß wird dieses Problem durch die Gegenstände der unabhängigen Ansprüche gelöst. Vorteilhafte Ausführungen sind Gegenstand der abhängigen Ansprüche.

Die Erfindung beruht auf dem Gedanken, einen Spannbügel, der bei geschlossenem Faltverdeck auf einem heckseitigen Deckel oder einem heckseitigen Verkleidungsteil aufliegt, während dem Öffnungs- oder Schließvorgang ohne aufwändiges Hebelgetriebe oder einen zusätzlichen Antrieb von einer abgesenkten Position in eine angehobene Position verschwenken zu können.

Hierzu wird der Spannbügel über Lenker mit dem C-Säufenlenker und dem Hauptlager verbunden, mittels einer Kulisse in einer Kuliesenscheibe und über einen Stift, der in die Kulisse eingreift, geführt. Die Ausführung der Kulisse ermöglicht es, dass beim Öffnen des Faltverdecks dem Spannbügel außer seiner Schwenkbewegung eine zusätzliche Bewegung in Längsrichtung ermöglicht wird. Dies ist von besonderem Vorteil, da durch die zusätzliche Längsbewegung der zuvor gespannte Verdeckstoff in seiner Spannung erheblich reduziert wird und somit die Faltenbildung bzw, das Falten in die abgelegte, dachoffene Position erleichtert wird.

Zur Vermeidung von Klappergeräuschen des bei geöffnetem Faltverdeck abgelegten Spannbügels, sowie zum Zurückführen der Schwenk- und Längsbewegung verbleibt der Stift in der Kulisse.

Die Kulisse nimmt durch das Schwenken eine Position ein, in welcher der Spannbügel in seiner Lage fixiert wird. Die Kulisse, die Kulissenscheibe und der Stift stellen also eine Verriegelung des Spannbügels bei geöffneter Dachposition dar.

Bei der Erfindung wird zudem besonders Wert auf eine einfache und kostengünstige Lösung gelegt. Dies wird entgegen dem gebräuchlichen Stand der Technik für die Spannbügelbetätigung durch die reduzierte Anzahl an Bauteilen (ein Lenker mit Stift und eine Kulissenscheibe) erreicht.

Durch die Verwendung von verstellbaren exzentrischen Lagerungen der Kulissenscheibe und des Lenkers mit Stift kann der Spannbügel sowohl in seinem Bewegungsablauf wie auch mit dem Anpressdruck des Spannbügels auf das angrenzende Karosseriebauteil variiert werden. Durch die Verwendung unterschiedlicher Kulissen ist diese Spannbügelsteuerung für nahezu alle auf Karosseriebauteilen aufliegenden Spannbügel verwendbar.

Bei geschlossenem Faltverdeck liegt der Spannbügel unter Druck auf dem Karosseriebauteil auf. Häufig werden derartige Spannbügel über zusätzliche Verriegelungen zwischen dem Spannbügel und dem angrenzenden Karosserlebauteil bewerkstelligt. Durch entsprechende Gestaltung der Kulissenscheibe und der Kulisse ist es denkbar, dass auch bei geschlossenem Faltverdeck der auf dem Karosseriebauteil aufliegende Spannbügel in seiner Position verriegelt wird.

Weitere wichtige Merkmale und Vorteile ergeben sich aus den Unteransprüchen, aus den Zeichnungen und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

### Es zeigen, jeweils schematisch,

Fig. 1 eine Seitenansicht des Faltverdeckgestänges bei geschlossenem Faltverdeck,
Fig. 2 den Endbereich des Spannbügels mit Verbindungslenkern zum C-Säulenienker und zum Hauptlager von der Fahrzeugaußenseite aus betrachtet,
Fig. 3 den Endbereich des Spannbügels mit der Kulissenscheibe hinter einem transparent dargestellten C-Säulenlenker von der Fahrzeuginnenseite aus betrachtet,
Fig. 4 eine Ansicht von der Fahrzeugaußenseite betrachtet mit transparentem hakenförmigen Endstück des Spannbügels und Eingriff des Stiftes in der Kulisse,
Fig. 5 den Spannbügel mit Hebel und Stift, die Kulissenscheibe und den Lenker bei geschlossenem Faltverdeck,
Fig. 6 den Spannbügel in aufgestellter Position und den Stift unmittelbar vor Eingriff in die Kulisse,
Fig. 7 den abgelegten Spannbügel bei geöffnetem Faltverdeck mit in die Kulisse eingreifendem Stift in Verriegelungsposition.

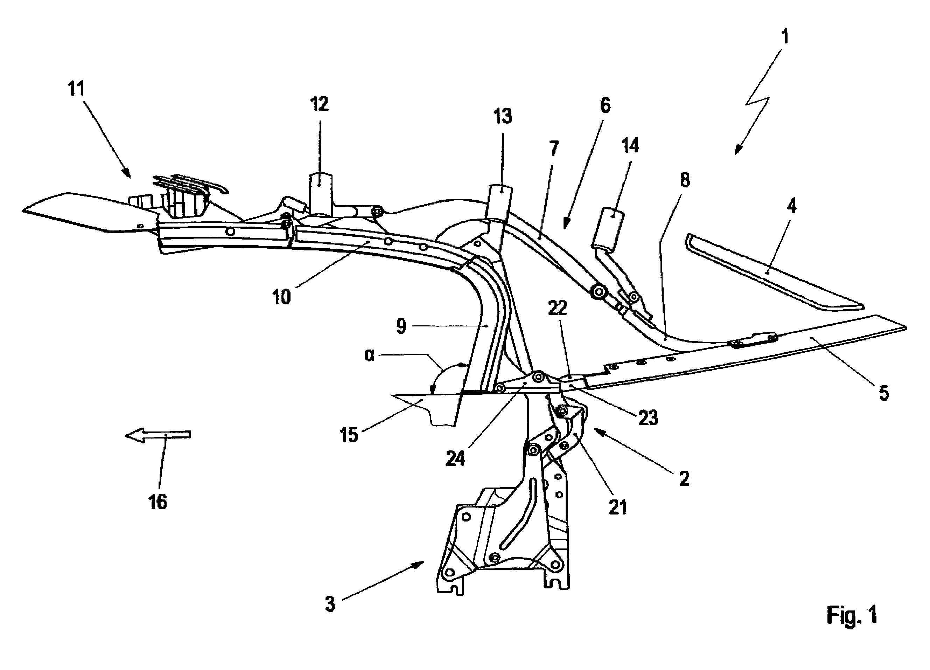

In Figur 1 ist eine Seitenansicht des Faltverdeckgestänges bei geschlossenem Faltverdeck 1 abgebildet. Der Spannbügel 5 liegt in dieser Ansicht auf einem Karosseriebauteil, einem Verdeckkastendeckel oder einem Kofferraumdeckel auf. In dieser Position wird der Spannbügel 5 über eine Sturmstange 6, die aus einem vorderen Sturmstangentenker 7 und einem hinteren Sturmstangenlenker 8 besteht, in die den Verdeckstoff spannende Position gedrückt und in dieser Position fixiert. Über die Sturmstange 6 spannt der Spannbügel 5 das Faltverdeck 1, so dass der Verdeckstoff über die Spriegel 12,13,14 geführt und gespannt wird und die Heckscheibe 4 über die so in den Verdeckstoff eingeleitete Spannung in ihrer Betriebsstellung gehalten wird.

Der Spannbügel 5 ist über Lenker 23, 24 schwenkbar mit dem C-Säulenlenker 9 verbunden, wobei der C-Säulenlenker 9 schwenkbar am Hauptlager 3 gelagert ist. Weiter ist der Spannbügel 5 mittels einer Lenkersteuerung 2 am Hauptlager 3 bewegbar befestigt. Die Lenkersteuerung 2 setzt sich im Wesentlichen aus einem hakenförmigen Endstück 22 des Spannbügels 5, einer Kullssenscheibe 19 und einem weiteren hakenförmigen Lenker 21 zusammen.

Der C-Säulenlenker 9, der oberhalb der Fensterbrüstung die C-Säule 9 bildet, ist zur Fensterbrüstung 15 in einem stumpfen Winkel α angeordnet, wobei der C-Säulenlenker 9 mittels eines stufenförmigen Versatzes unterhalb der Fensterbrüstung 15 bis zu seiner schwenkbaren Lagerung 36 am Hauptlager 3 weitergebildet ist. Im in Fahrtrichtung 16 weisenden Endbereich der C-Säule 9 grenzt ein mittiger Dachseitenträger 10 an den C-Säulenlenker 9 an. Dieser Dachseitenträger 10 ist mit seinem dem C-Säulenlenker 9 abgewandten Ende schwenkbar mit der Dachkappe 11 verbunden, an der in ihrem vorderen Bereich der Verdeckstoff befestigt ist.

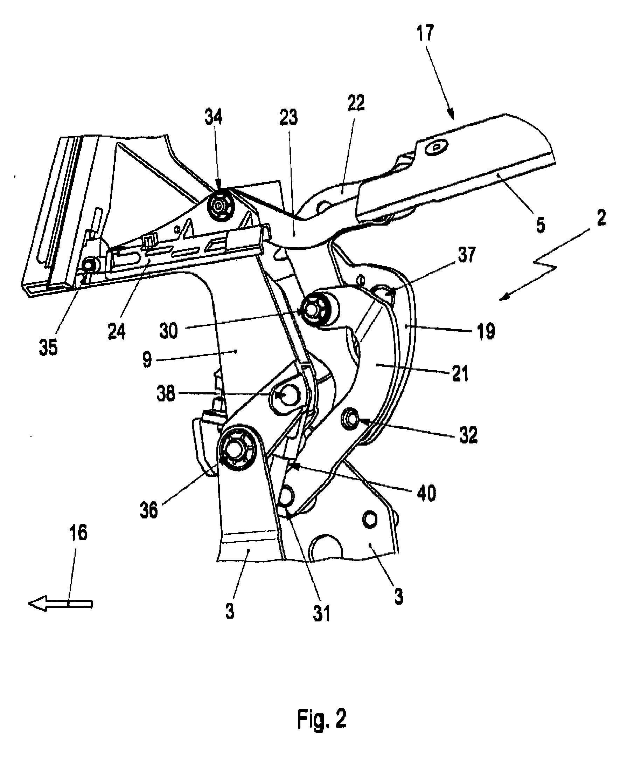

Der Endbereich des Spannbügels 5 ist mit Verbindungslenkern 21, 23, 24 zum C-Säulenlenker 9 und zum Hauptlager 3 von der Fahrzeugaußenseite aus betrachtet in Figur 2 dargestellt. Der Spannbügel 5 ist beispielsweise U-förmig ausgebildet, wobei an seinen Senkelenden 17 ein hakenförmiges Endstück 22 elngeschoben ist und durch Verbindungsmittel mit dem Spannbügel 5 fest verbunden ist. Das freie Ende des hakenförmigen Endstücks 22 ragt nach unten in Richtung des Hauptlagers 3 und ist an seinem Ende über die Lagerung 30 mit einem weiteren hakenförmigen Lenker 21 schwenkbar verbunden. Der hakenförmige Lenker 21 Ist mit seinem freien Ende mittels des Lagers 31 schwenkbar mit dem Hauptlager 3 verbunden.

Nahe den Schenkelenden 17 des Spanbügels 5 ist am hakenförmigen Endstück 22 ein Lenker 23 über das Lager 33 angelenkt. Mit seinem anderen Ende ist der Lenker 33 schwenkbar über das Lager 34 mit einem Lenker 24 verbunden, der seinerseits schwenkbar mittels des Lagers 35 an dem C-Säulenlenker 9 befestigt ist. Beide Lenker 23, 24 steuern begrenzend die vertikale und horizontale Beweglichkeit des Spannbügels 5, wobei der Lenker 24 an seiner Unterseite Befestigungen zur Verdeckstoffhalterung aufweist.

Nahe der unteren Lagerung 31 des hakenförmigen Lenkers 21 ist der C-Säulenlenker 9 mit der Lagerung 36 am Hauptlager 3 schwenkbar angebracht. Die Bewegung des Spannbügeis 5, der Lenker 21, 23, 24 sowie des C-Säulenlenkers 9 erfolgt über einen Linearantrieb 40, welcher an der unteren Hälfte nahe des Lagers 36 angebracht ist. Der Linearantrieb 40 ist vorzugsweise als hydraulischer Zylinder ausgebildet, wobei selbstverständlich andere Linearantriebe verwendet werden können.

Die Lagerung 31 (hakenförmiger Lenker 21 am Hauptlager 3) und die Lagerung 36 (C-Säulenlenker 9 am Hauptlager 3) sind benachbart positioniert, wodurch beim Schwenken des C-Säulenlenkers 9 und des Spannbügels 5 die zwischen den beiden Lagerungen 31, 36 wirkenden vertikalen und horizontalen Abstände für eine zusätzliche Relativbewegung -horizontal und vertikal- des Spannbügels 5 zum C-Säulenlenker sorgen.

Von der Fahrzeugaußenseite betrachtet ist hinter dem hakenförmigen Lenker 21 und dem hakenförmigen Endstück 22 eine Kulissenscheibe 19 angeordnet, wobei die Kulissenscheibe 19 zum einen schwenkbar an dem hakenförmigen Lenker 21 über die Lagerung 32 und über die Lagerung 37 schwenkbar an einem Ausleger des C-Säulenlenkers 9 gelagert ist. Über die verbindende Lagerung 32 wird die Kulissenscheibe 19 mit dem hakenförmigen Lenker 21 mitgeschwenkt, wobei die Kulissenscheibe 19 durch die Verbindung des Lagers 37 über den C-Säulenlenker 9 eine vom hakenförmigen Lenker 21 und vom C-Säulenlenker 9 unterschiedliche Schwenkbewegung erfährt. Hierdurch wird eine drehende Bewegung auf die Kulissenscheibe 19 erzeugt, die bei ablegendem Spannbügel 5 (sich öffnendem Faltverdeck 1) vom Spannbügel 5 weggerichtet ist.

Über einen Stift 41, der etwa im Krümmungsbereich des hakenförmigen Endstücks 22 an diesem orthogonal zur Kulissenscheibe 19 angebracht ist, wird bei sich öffnendem und im Verdeckkasten ablegendem Faltverdeck 1 ein Eingriff des Stiftes 41 in eine Kulisse 20 der Kulissenscheibe 19 bewirkt. Die Kulisse 20 der Kulissenscheibe 19 ist so in ihrer Bahn ausgelegt, dass der Stift 41 und das hakenförmige Endstück 22 entsprechend den Verschwenkungen und Bewegungen folgen kann. Weiter ermöglicht die Kulisse 20 über den Stift 41 zusätzlich eine Führung, damit der Spannbügel 5 die gewünschten horizontalen und vertikalen Verlagerungen durchführen kann.

Durch die Lenker 21, 23, 24 und 9 werden Schwenkbewegungen auf den Spannbügel 5 übertragen. Der Spannbügel 5 erfährt hierdurch Bewegungen, die ohne Kulisse 20 der Kulissenscheibe 19 zu unterschiedlichen Positionen des Spannbügels 5 führen könnten. Die Kulisse 20 der Kulissenscheibe 19 begrenzt diesen Freiheitsgrad durch die gezielte Führung in der Kulisse 20 und zwingt somit den Spannbügel 5 eine genau vorgegebene Bewegung auszuführen.

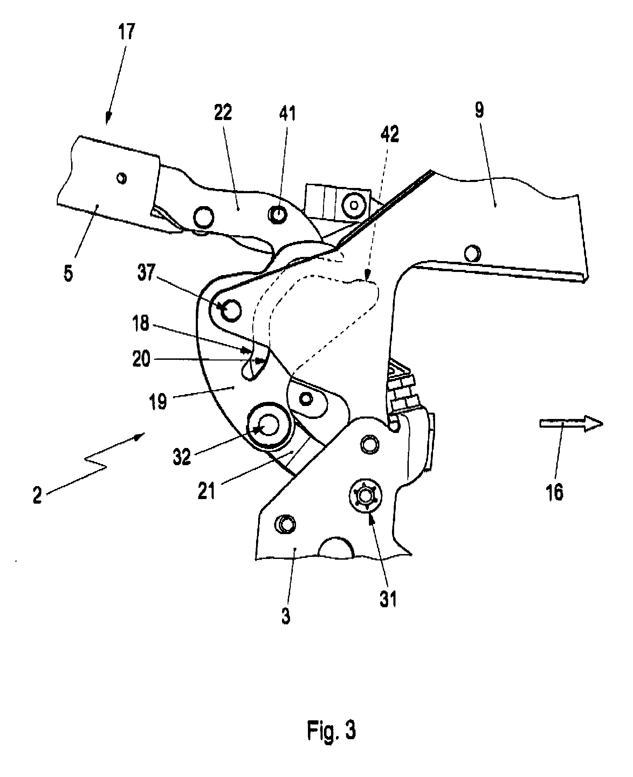

Die Figur 3 zeigt eine Ansicht in der gleichen Ausgangsposition wie unter Figur 2 beschrieben, jedoch ist hierbei eine Ansicht ausgehend von der Fahrzeuginnenseite gewählt worden. Beide Ansichten zeigen das Faltverdeck in gesahlossener Lage, wobei der Stift 41 oberhalb der Kulissenscheibe 19 positioniert ist. Das offene Ende der schlitzförmigen Öffnung 18 der Kulisse 20 weist in Fahrtrichtung 16, wobei der dem Hauptlager 3 zugewandte Bereich der schlitzförmigen Öffnung 18 einen vorgelagerten Bereich als Führungsbereich 42 aufweist.

Im Wesentlichen ist die Kulissenscheibe 19 unterhalb der Fensterbrüstung 15 und innerhalb des unter der Fensterbrüstung 15 angeordneten Teilbereichs des C-Säulenlenkers positioniert.

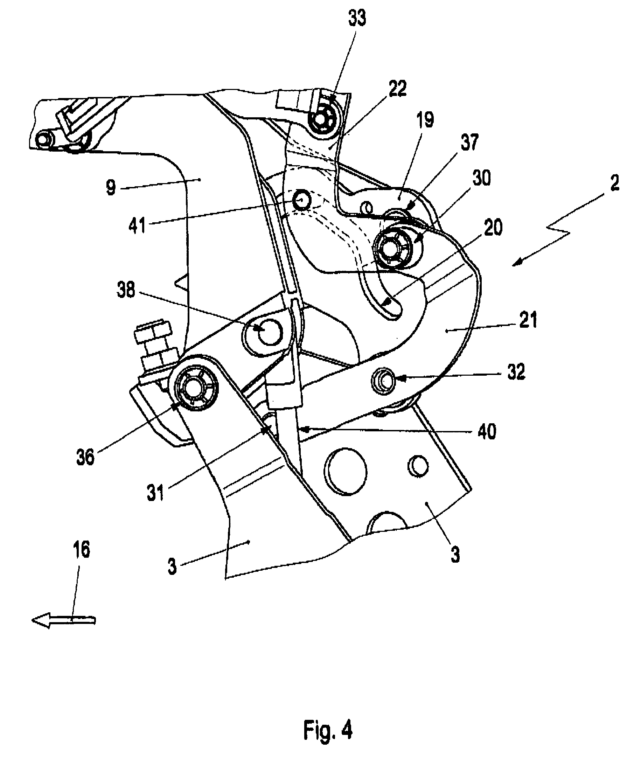

Die Darstellung in Figur 4 zeigt eine Ansicht von der Fahrzeugaußenseite mit transparentem hakenförmigen Endstück 22 des Spannbügels 5 und Eingriff des Stiftes 41 in der Kulisse 20. Der C-Säulenlenker 9 ist in dieser Darstellung teilweise entgegen der Fahrtrichtung 16 geschwenkt. Der Spannbügel 5 ist in etwa in seine obere Endlage bewegt, so dass der Stift 41 im ersten Drittel der Kulisse 20 in Eingriff steht. Hierzu wurde die Kulissenscheibe 19 teilweise in Fahrtrichtung 16 geschwenkt. Die Lagerung 32 bewegt sich in dieser Stellung auf den entgegen schwenkenden C-Säulenlenker 9 zu, so dass sich die Lagerung 32 in Richtung des Stifts 41 bewegt und sich die Kulissenscheibe 19 über ihre Lagerung 37 in Fahrtrichtung schwenkt. Während des weiteren Schwenkvorgangs des C-Säulenlenkers 9 entgegen der Fahrtrichtung 16 ist der hakenförmige Lenker 21 über das hakenförmige Endstück 22 des Spannbügels 5 über beide Lenker 23 und 24 mit dem C-Säulanlenker 9 gekoppelt und überträgt somit dessen Bewegung auf die Kulissenscheibe 19.

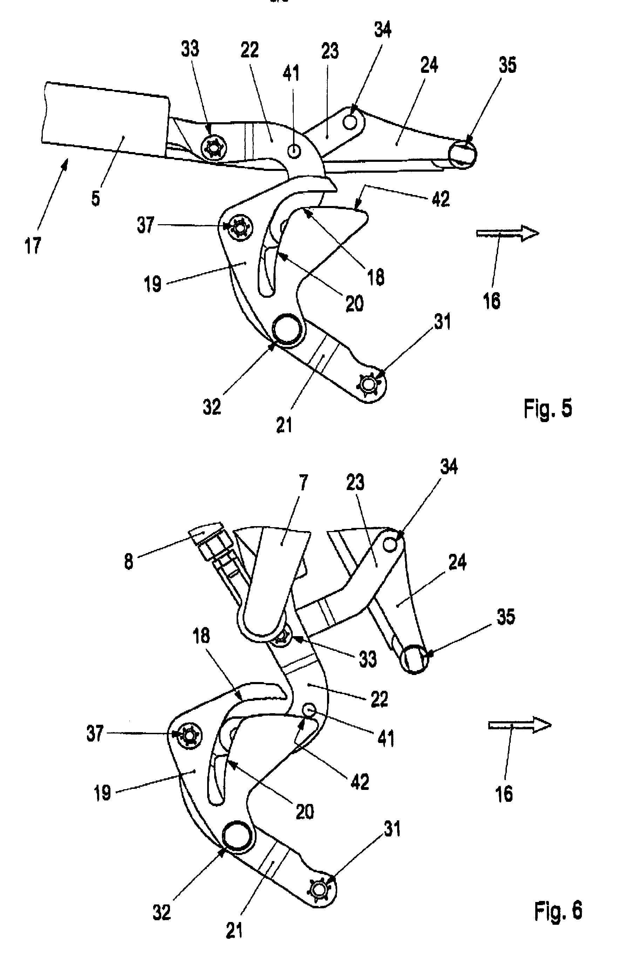

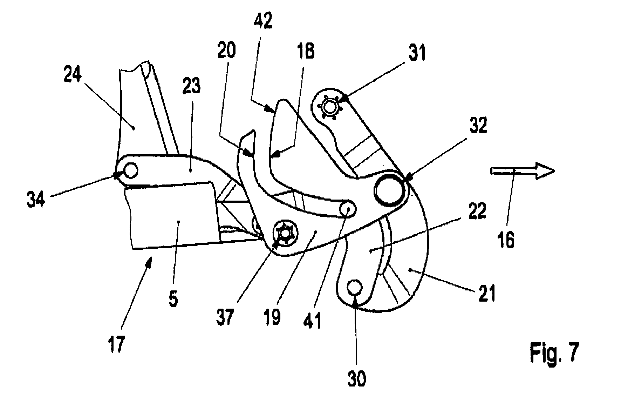

In den Figuren 5 bis 7 ist der Bewegungsablauf der Lenkersteuerung 2 mit hakenförmigem Endstück 22 des Spannbügels 5, hakenförmigem Lenker 21 und der Kulissenscheibe 19 abgebildet, wobei Figur 5 als Ausgangsposition ein geschlossenes Faltverdeck 1 darstellt und Figur 7 die gesamte Lenkersteuerung 2 bei abgelegtem Spannbügel 5 und geöffnetem Faltverdeck 1 zeigt.

In Figur 5 ist die Lenkersteuerung 2 bei geschlossenem Faltverdeck 1 dargestellt. Der Spannbügel 5 liegt auf einem Verdeckkastendeckel oder einem Kofferraumdeckel auf. Die den Spannbügel 5 mit dem C-Säulenlenker 9 verbindenden Lenker 23, 24 befinden sich nahezu in gestreckter und hintereinander angeordneter Lage. Die am hakenförmigen Lenker 21 und am C-Säulenlenker 9 gelagerte Kulissenscheibe 19 befindet sich in aufrechter Position, wobei das offene Ende der schlitzförmigen Öffnung 18 der Kulisse 20 in Fahrtrichtung 16 weist. Der Führungsbereich 42, der zur Aufnahme des Stifts 41 dient, sowie dazu, den Stift 41 in die Kulisse 20 einzuführen, ist im Wesentlichen horizontal ausgerichtet. Der Stift 41 ist nahe dem Spannbügel 5 am hakenförmigen Endstück 22 angebracht und befindet sich oberhalb und hinter der Kulissenscheibe 19 in Ruheposition.

Die Figur 6 zeigt das Faltrverdeck 1 in einer Zwischenstellung eines teilweise geöffneten Faltverdecks 1, bei welcher der Spannbügel 5 in eine annähernd vertikale Position nach oben geschwenkt ist. Die den Spannbügel 5 mit dem C-Säulenlenker 9 verbindenden Lenker 23, 24 bilden einen nahezu rechten Winkel zueinander, wobei in dieser Position der Spannbügel 5 nach unten bewegt wird und somit der Stift 41 auf den Führungsbereich 42 trifft. Die Abwärtsbewegung wird über die gelenkige Anordnung des hakenförmigen Endstücks 22 zum hakenförmigen Lenker 21 ermöglicht, wobei das Schwenken des hakenförmigen Endstücks 22 den Stift 41 auf den Führungsbereich 42 bewegt. Die Position der Kulissenscheibe 19 hat sich in dieser Position nicht wesentlich verändert.

In Figur 7 ist das Faltverdeck 1 geöffnet und der Spannbügel 5 sowie das Faltverdeck 1 im Verdeckkasten abgelegt. Bei der zuvor in Figur 6 beschriebenen teilweise geöffneten Zwischenposition schwenkt der hakenförmige Lenker 21 entgegen der Fahrtrichtung 16 so weit, bis dass die Lager 30 und 31 nahezu vertikal übereinander angeordnet positioniert sind. Diese Position ist die Endstellung der Lenkersteuerung 2 bei geöffnetem Faltverdeck 1.

Das hakenförmige Endstück 22 ist hierbei mit seiner Krümmung im Wesentlichen parallel zur Krümmung des hakenförmigen Lenkers 21 positioniert, wobei die Außenseite des Krümmungsbereichs des hakenförmigen Endstücks 22 zur Innenseite der Krümmung des hakenförmigen Lenkers 21 weist.

Durch Schwenken des Spannbügels 5 mit seinem hakenförmigen Endstück 22 wird der hakenförmige Lenker 21 durch die Lagerverbindung 30 in die zuvor beschriebene Endlage bewegt. Das Lager 31 des hakenförmigen Lenkers 21 ist am Hauptlager 3 angeordnet. Die Lagerung 37 ist die gemeinsame Lagerung zwischen Kulissenscheibe 19 und dem unteren Teil des C-Säulenlenkers 9, der bei geöffnetem Faltverdeck 1 in den Verdeckkasten geschwenkt ist und somit die Kulissenscheibe 19 über die gemeinsame Lagerung 37 um die Lagerung 32, (zwischen Kulissenscheibe 19 und dem hakenförmigen Lenker 21) weiter entgegen dem Uhrzeigersinn schwenkt. Hierbei wird der In der Kulisse 20 im Eingriff befindliche Stift 41 im Wesentlichen bis zum Ende der schlitzförmigen Öffnung 18 der Kulisse 20 geführt. In dieser Position kann der Stift 41 teilweise durch die Kulisse 20 selber und zum anderen durch die kinematischen Verbindungen zu dem hakenförmigen Lenker 21, und dem C-Säulenlenker 9 nicht von selber in seiner Position verändert werden.

In vertikaler Richtung wird eine Bewegung des Stiftes 41 durch den Eingriff mit einem im Wesentlichen waagrecht angeordneten Teil der Kulisse 20 verhindert. Eine Bewegungsmöglichkeit des Stiftes 41 in horizontaler Richtung sowie in Fahrtrichtung 16 wird durch den Endbereich der Kulisse 20 begrenzt. Entgegen der Fahrtrichtung 16 wird eine Bewegung des Stiftes 41 durch die Verbindung des hakenförmigen Lenkers 21 mit der Kulissenscheibe 19 und dem C-Säulenlenker 9 verhindert.

Über diese Abhängigkeiten findet eine Verriegelung des Spannbügels 5 bei geöffnetem und im Heckbereich abgelegtem Faltverdeck 1 statt. Diese Verriegelung kann nur durch die Schwenkbewegung des C-Säulenlenkers 9 in Richtung der Position des geschlossenen Faltverdecks 1 wieder entriegelt werden.

### Bezugszeichenliste

- 1: Faltverdeck, Verdeck, Soft Top
- 2: Lenkersteuerung für Spannbügel
- 3: Hauptlager
- 4: Heckscheibe
- 5: Spannbügel
- 6: Sturmstange
- 7: vorderer Sturmstangenlenker
- 8: hinterer Sturmstangenlenker
- 9: C-Säule, C-Säulenlenker
- 10: mittlerer Dachseitenträger
- 11: Dachkappe
- 12: Spriegel 1
- 13: Spriegel 2
- 14: Spriegel 3
- 15: Fensterbrüstung
- 16: Fahrtrichtung
- 17: Schenkelenden
- 18: schlitzftirmige Öffnung
- 19: Kulissenscheibe
- 20: Kulisse
- 21: hakenförmiger Lenker
- 22: Endstück, hakenförmiges Endstück
- 23: Lenker 1
- 24: Lenker 2

- 30: Lager
- 31: Lager
- 32: Lager
- 33: Lager
- 34: Lager
- 35: Lager
- 36: Lager
- 37: Lager
- 38: Lager

- 40: Antrieb
- 41: Stift
- 42: Führungsbereich

## Patentansprüche

1. Spannbügel für ein Faltverdeck eines Personenkraftwagens, wobei das Faltverdeck mittels eines bewegbar angelenkten Verdeckgestänges von einer einen Fahrgastraum überspannenden Schließstellung in eine heckseitige Ablagestellung bewegbar ist, und der Spannbügel zum Straffen eines vorderen und hinteren festgelegten Abschlusses eines Verdeckbezugs schwenkbar um eine im Wesentlichen horizontal verlaufende, fahrzeugfeste Schwenkachse gelagert ist, und das Schwenken des Spannbügels über endseitig mit dem Spannbügel verbundene Lenker erfolgt, wobei wenigstens einer dieser Lenker mit einem den C-Säulenlenker verbindenden und bewegungssteuernden Bauteil zusammenwirkt,
**dadurch gekennzeichnet, dass** das verbindende und den Spannbügel (5) bewegungssteuernde Bauteil eine Kulissenscheibe (19) ist.

2. Spannbügel für ein Faltverdeck eines Personenkraftwagens nach Anspruch 1, **dadurch gekennzeichnet, dass** die Kulissenschelbe (19) sowohl mit dem Lenker (21) Ober die Lagerung (32) schwenkbar verbunden ist und zum anderen über die Lagerung (37) schwenkbar mit dem C-Säulenlenker (9) bewegbar gelagert ist.

3. Spannbügel für ein Faltverdeck eines Personenkraftwagens nach Anspruch 2, **dadurch gekennzeichnet, dass** der Lenker (21) ein hakenförmiger Lenker (21) ist.

4. Spannbügel für ein Faltverdeck eines Personenkraftwagens nach den Ansprüchen 1 und 2,
**dadurch gekennzeichnet, dass** die Kulissenscheibe (19) eine Kulisse (20) aufweist und die Kulisse (20) durch eine einseitig offene schlitzförmige Öffnung (18) gebildet wird.

5. Spannbügel für ein Faltverdeck eines Personenkraftwagens nach den Ansprüchen 1, 2 und 4,
**dadurch gekennzeichnet, dass** bei der einseitig offenen schlitzförmigen Öffnung (18) im Öffnungsbereich eine seitliche Begrenzung der schlitzförmigen Öffnung (18) zu einem vorstehenden Führungsbereich (42) ausgebildet ist.

6. Spannbogel für ein Faltverdeck eines Personenkraftwagens nach Anspruch 1, **dadurch gekennzeichnet, dass** in die Schenkelenden (17) des Spannbügels (5) ein hakenförmiges Endstück (22) eingebracht ist, wobei das hakenförmige Endstück (22) durch Verbindungsmittel mit dem Spannbügel (5) fest verbunden ist.

7. Spannbügel für ein Faltverdeck eines Personenkraftwagens nach Anspruch 6 **dadurch gekennzeichnet, dass** der den Haken bildende Schenkel des hakenförmigen Endstücks (22) nach unten in Richtung Fahrbahn weist.

8. Spannbügel für ein Faltverdeck eines Personenkraftwagens nach einem der Ansprüche 6 und 7,
**dadurch gekennzeichnet, dass** das durch den Endbereich des Spannbügels (5) aufgenommene, hakenförmige Endstück (22) einen in Richtung der Kulissenscheibe (19) weisenden Stift (41) aufweist.

9. Spannbügel für ein Faltverdeck eines Personenkraftwagens nach einem der Ansprüche 1, 2, 4 und 5, **dadurch gekennzeichnet, dass** beim Öffnen des Faltverdecks (1) der Spannbügel (5) in eine nach oben weisende Position geschwenkt wird und in dieser Position der Stift (41) auf den Führungsbereich (42) trifft.

10. Spannbügel für ein Faltverdeck eines Personenkraftwagens nach einem oder mehreren der vorangehenden Ansprüche,
**dadurch gekennzeichnet, dass** bei vollständig öffnendem Faltverdeck (1) der Stift (41) in der schlitzförmigen Öffnung (18) der Kulisse (20) bis zu dessen Ende geführt wird und der Spannbügel (5) entsprechend der Form der Kulisse (20) Bewegungen ausführt.

11. Spannbügel für ein Faltverdeck eines Personenkraftwagens nach einem oder mehreren der vorangehenden Ansprüche,
**dadurch gekennzeichnet, dass** der Stift (41) am geschlossenen Ende der Kulisse (20) eine Positionsverriegelung für den im heckseitigen Aufnahmeraum abgelegten Spannbügel (5) bildet.

12. Spannbügel für ein Faltverdeck eines Personenkraftwagens nach einem der Ansprüche 1, 2 und 6 bis 8,
**dadurch gekennzeichnet, dass** das freie Ende des hakenförmigen Endstücks (22) des Spannbügels (5) schwenkbar mit einem einen Haken bildenden Bereich eines hakenförmigen Lenkers (21) verbunden ist und der hakenförmige Lenker (21) mit seinem freien Ende schwenkbar über die Lagerung (31) am Hauptlager (3) aufgenommen ist.

13. Spannbügel für ein Faltverdeck eines Personenkraftwagens nach einem der Ansprüche 1, 2, 6 bis 8 und 12,
**dadurch gekennzeichnet, dass** im Endbereich des Spannbügels (5) ein Lenker (23) in einem Lager (33) schwenkbar angebracht ist und der Lenker (23) über das Lager (34) schwenkbar mit einem Lenker (24) verbunden ist, wobei der Lenker (24) mit seinem freien Ende schwenkbar am C-Säulenlenker (9) befestigt ist.

14. Spannbügel für ein Faltverdeck eines Personenkraftwagens nach einem oder mehreren der vorangehenden Ansprüche,
**dadurch gekennzeichnet, dass** beim Öffnen des Faltverdecks (1) die Kulissenscheibe (19) über den hakenförmigen Lenker (22) und über den C-Säulenlenker (9) entgegen der Fahrtrichtung (16) bewegt und dabei entgegen des Uhrzeigersinns geschwenkt wird.

15. Spannbügel für ein Faltverdeck eines Personenkraftwagens nach einem oder mehreren der vorangehenden Ansprüche,
**dadurch gekennzeichnet, dass** in einem ersten Schritt der Spannbügel (5) in eine aufrechte Position schwenkt und der Stift (41) auf die Führungsbahn (42) trifft, und in einem zweiten Schritt der Spannbügel (5) zusammen mit dem C-Säulenlenker (9) in den Heckbereich schwenkt, wobei der Stift (41) in der Kulisse (20) geführt wird.

16. Spannbügel für ein Faltverdeck eines Personenkraftwagens nach Anspruch 2.
**dadurch gekennzeichnet, dass** die Kulissenscheibe (19) unterhalb der Fensterbrüstung (15) angeordnet ist.

17. Spannbügel für ein Faltverdeck eines Personenkraftwagens nach einem oder mehreren der vorangehenden Ansprüche,
**dadurch gekennzeichnet, dass** bei geöffnetem Faltverdeck (1) das hakenförmige Endstück (22) mit seiner Krümmung innerhalb der Krümmung des hakenförmigen Lenkers (21) liegt, wobei die Außenseite des Krümmungsbereichs des hakenförmigen Endstücks (22) zur Innenseite der Krümmung des hakenförmigen Lenkers (21) zeigt.
